# EUROPEAN PATENT APPLICATION

(11) **EP 4 427 955 A1**
(43) Date of publication of application: **11.09.2024**
(21) Application number: 23814081.8
(22) Date of filing: 17.01.2023
(51) Int. Cl.: B60H 1/00, B60H 1/32, B61D 27/00, F28D 1/047

(54) **VEHICLE AIR CONDITIONER**

(71) Applicant: Mitsubishi Electric Corporation, Tokyo 100-8310 (JP)
(72) Inventor: INOUE, Takeshi, Chiyoda-ku Tokio 1008310 (JP)
(74) Representative: Studio Torta S.p.A.
(86) International application number: PCT/JP2023/001145
(87) International publication number: WO 2024/154217

(57) **Abstract**

In an air conditioner for a vehicle, a partition plate (510) hermetically separates an internal space of a housing into an external connection space (SB 1) connecting to an outside and a compartment connection space (SA) connecting to a compartment of the vehicle. An indoor heat exchanger (100A) includes a heat exchanger (110) located in the compartment connection space (SA) and a heat-transfer pipe (131, 132) extending through the heat exchanger (110) to allow a refrigerant to flow through the heat-transfer pipe (131, 132). The heat-transfer pipe (131, 132) includes multiple partial pipes (140) having a seamless structure, and a connection pipe (150) connecting the partial pipes (140) to one another. The external connection space (SB1) includes an inter-device joint (CA) between the heat-transfer pipe (131, 132) and an inter-device pipe (13, 23), and includes an intra-device joint (CB) between each partial pipe (140) and the connection pipe (150).

## Description

### Technical Field

The present disclosure relates to an air conditioner for a vehicle.

### Background Art

A known air conditioner for a vehicle air-conditions a compartment of a vehicle. The compartment is a space defined in the vehicle to accommodate passengers.

The air conditioner for a vehicle includes a refrigerant circuit providing a refrigeration cycle. The refrigeration circuit includes an indoor heat exchanger, a compressor, an outdoor heat exchanger, an expander, and a refrigerant pipe connecting these components to form a closed circuit. The refrigerant circuit is accommodated in a housing installed in the vehicle.

The housing includes a partition plate that hermetically partitions an accommodation space accommodating the refrigerant circuit into a compartment connection space connecting to a compartment and an external connection space connecting to the outside. The compartment connection space accommodates the indoor heat exchanger. The external connection space accommodates the compressor, the expander, and the outdoor heat exchanger.

Patent Literature 1 describes an air-conditioner for a vehicle including an indoor heat exchanger extending through a partition plate. In this structure, a joint between the indoor heat exchanger and a refrigerant pipe connected to a compressor and a joint between the indoor heat exchanger and a refrigerant pipe connected to an expander are located in an external connection space. Thus, when a refrigerant leaks from any of the joints, the leaking refrigerant less easily flows into the compartment.

### Citation List

### Patent Literature

Patent Literature 1: Unexamined Japanese Patent Application Publication No. 2010-260398

### Summary of Invention

### Technical Problem

Patent Literature 1 does not describe any structure of the indoor heat exchanger.

An objective of the present disclosure is to provide an air conditioner for a vehicle that can further reduce the possibility of a refrigerant flowing into a compartment.

### Solution to Problem

An air conditioner for a vehicle according to an aspect of the present disclosure includes a housing installable on a vehicle, and a refrigerant circuit accommodated in the housing. The housing defines, in an internal space of the housing, an external connection space connecting to an outside, and a compartment connection space hermetically separate from the external connection space and connecting to a compartment of the vehicle. The refrigerant circuit includes an indoor heat exchanger including a heat exchanger located in the compartment connection space and a heat-transfer pipe extending through the heat exchanger to allow a refrigerant to flow through the heat-transfer pipe, a cooperative device located in the external connection space to provide, together with the indoor heat exchanger, a refrigeration cycle using the refrigerant, and an inter-device pipe connecting the heat-transfer pipe and the cooperative device to allow the refrigerant to flow through the inter-device pipe. The heat-transfer pipe includes a plurality of partial pipes having a seamless structure, and a connection pipe connecting the plurality of partial pipes to one another. The external connection space includes an inter-device joint between the heat-transfer pipe and the inter-device pipe, and includes an intra-device joint between each partial pipe of the plurality of partial pipes and the connection pipe.

### Advantageous Effects of Invention

In the structure according to the above aspect of the present disclosure, the intra-device joint is located in the external connection space, in addition to the inter-device joint. This structure can thus further reduce the possibility of a refrigerant flowing into the compartment.

### Brief Description of Drawings

FIG. 1 is a schematic diagram of an installation example of an air conditioner for a vehicle according to Embodiment 1;
FIG. 2 is a schematic diagram of the air conditioner for a vehicle according to Embodiment 1;
FIG. 3 is a plan view of the air conditioner for a vehicle according to Embodiment 1;
FIG. 4 is a schematic diagram of a first indoor heat exchanger in Embodiment 1;
FIG. 5 is a schematic diagram of a first indoor heat exchanger in Embodiment 2;
FIG. 6 is a perspective view of a part of a first indoor heat exchanger in Embodiment 3;
FIG. 7 is a plan view of an air conditioner for a vehicle according to Embodiment 4;
FIG. 8 is a perspective view of an air conditioner for a vehicle according to Embodiment 5;
FIG. 9 is a cross-sectional view of a receiver in Embodiment 5, taken parallel to the length direction of the vehicle; and
FIG. 10 is a cross-sectional view of the receiver in Embodiment 5, taken parallel to the width direction of the vehicle.

### Description of Embodiments

An air conditioner for a vehicle according to one or more embodiments is described below with reference to the drawings. In the figures, the same reference signs denote the same or corresponding components.

### Embodiment 1

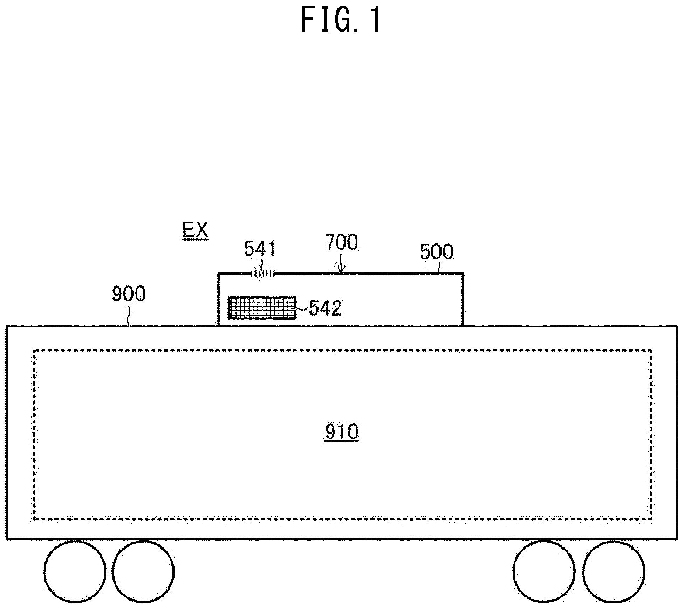

As illustrated in FIG. 1, an air conditioner 700 for a vehicle according to the present embodiment is attached to a vehicle 900 to air-condition a compartment 910 in the vehicle 900. In the present embodiment, the vehicle 900 is a railway vehicle, and the compartment 910 is a passenger compartment. More specifically, the air conditioner 700 for a vehicle is attached to a roof of the vehicle 900.

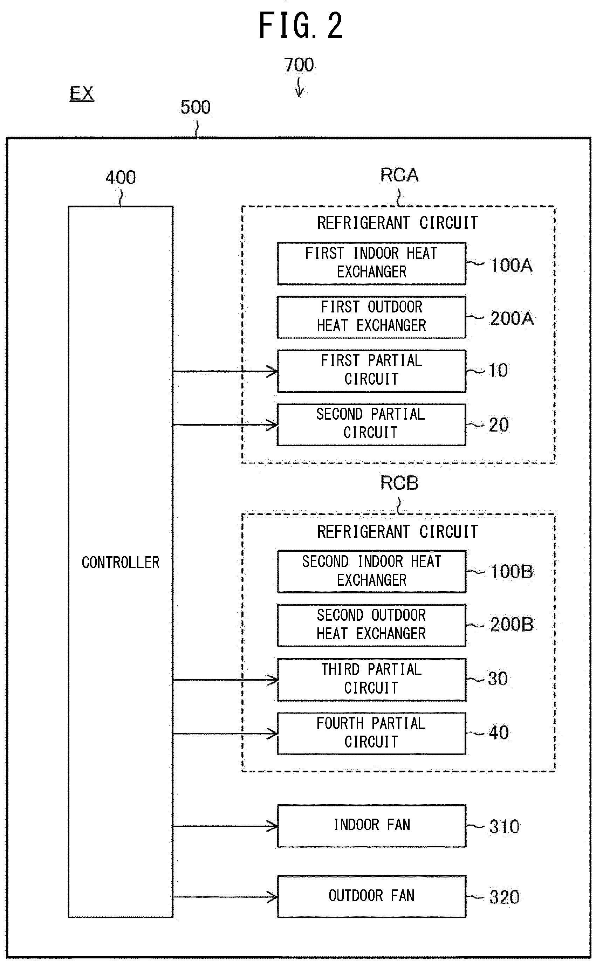

FIG. 2 illustrates the air conditioner 700 for a vehicle. The air conditioner 700 for a vehicle includes a housing 500 installed on the roof of the vehicle 900. The housing 500 accommodates a controller 400 as well as a refrigerant circuit RCA, a refrigerant circuit RCB, an indoor fan 310, and an outdoor fan 320 each controlled by the controller 400.

The refrigerant circuit RCA includes a first indoor heat exchanger 100A that performs heat exchange between air in the compartment 910 (hereafter also referred to as inside air) and a refrigerant, and a first outdoor heat exchanger 200A that performs heat exchange between air in an outside EX (hereafter also referred to as outside air) and the refrigerant. The outside EX herein refers to a space outside the housing 500 and outside the vehicle 900.

The refrigerant circuit RCA includes a first partial circuit 10 and a second partial circuit 20 that provide, together with the first indoor heat exchanger 100A and the first outdoor heat exchanger 200A, a refrigeration cycle through which the refrigerant flows. Either the first indoor heat exchanger 100A or the first outdoor heat exchanger 200A serves as an evaporator that evaporates the refrigerant, and the other heat exchanger serves as a condenser that condenses the refrigerant.

Similarly to the refrigerant circuit RCA, the refrigerant circuit RCB includes a second indoor heat exchanger 100B that performs heat exchange between inside air and the refrigerant, a second outdoor heat exchanger 200B that performs heat exchange between outside air and the refrigerant, and a third partial circuit 30 and a fourth partial circuit 40 that provide a refrigeration cycle together with the second indoor heat exchanger 100B and the second outdoor heat exchanger 200B. Either the second indoor heat exchanger 100B or the second outdoor heat exchanger 200B serves as an evaporator, and the other heat exchanger serves as a condenser.

The indoor fan 310 facilitates heat exchange between inside air and the refrigerant in each of the first indoor heat exchanger 100A and the second indoor heat exchanger 100B. The outdoor fan 320 facilitates heat exchange between outside air and the refrigerant in each of the first outdoor heat exchanger 200A and the second outdoor heat exchanger 200B.

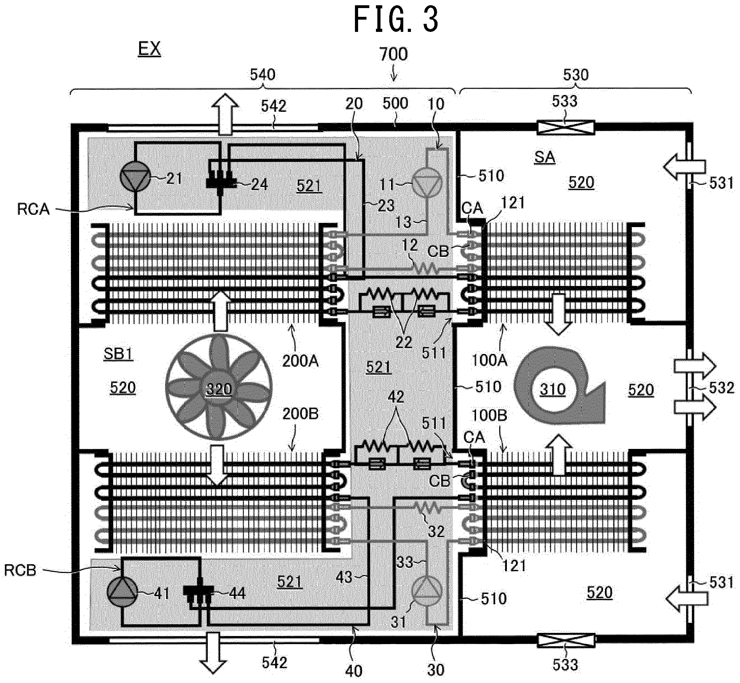

With reference to FIG. 3, the inside of the housing 500 is described more specifically.

The first partial circuit 10 includes a compressor 11 that compresses the refrigerant and an expander 12 that expands the refrigerant. The first partial circuit 10 provides a closed circuit (hereafter referred to as a first closed circuit) together with the first indoor heat exchanger 100A and the first outdoor heat exchanger 200A.

Each of the first indoor heat exchanger 100A and the first outdoor heat exchanger 200A is a fin tube heat exchanger.

The first partial circuit 10 includes inter-device pipes 13 that connect the first indoor heat exchanger 100A, the compressor 11, the first outdoor heat exchanger 200A, and the expander 12. In the first closed circuit, the first indoor heat exchanger 100A serves as an evaporator, and the first outdoor heat exchanger 200A serves as a condenser.

In the first closed circuit, the compressor 11, the first outdoor heat exchanger 200A, and the expander 12 are example cooperative devices that provide a refrigeration cycle together with the first indoor heat exchanger 100A.

The second partial circuit 20 includes a compressor 21 that compresses the refrigerant, an expander 22 that expands the refrigerant, and a four-way valve 24. The second partial circuit 20 provides a closed circuit (hereafter referred to as a second closed circuit) together with the first indoor heat exchanger 100A and the first outdoor heat exchanger 200A. The second closed circuit is independent of the first closed circuit described above.

The second partial circuit 20 includes inter-device pipes 23 that connect the first indoor heat exchanger 100A, the compressor 21, the four-way valve 24, the first outdoor heat exchanger 200A, and the expander 22.

In the second closed circuit, the four-way valve 24 switches between a mode in which the first indoor heat exchanger 100A serves as an evaporator and the first outdoor heat exchanger 200A serves as a condenser, and a mode in which the first indoor heat exchanger 100A serves as a condenser and the first outdoor heat exchanger 200A serves as an evaporator.

In the second closed circuit, the compressor 21, the first outdoor heat exchanger 200A, and the expander 22 are example cooperative devices that provide a refrigeration cycle together with the first indoor heat exchanger 100A.

The third partial circuit 30 includes a compressor 31 that compresses the refrigerant and an expander 32 that expands the refrigerant. The third partial circuit 30 provides a closed circuit (hereafter referred to as a third closed circuit) together with the second indoor heat exchanger 100B and the second outdoor heat exchanger 200B.

Each of the second indoor heat exchanger 100B and the second outdoor heat exchanger 200B is a fin tube heat exchanger.

The third partial circuit 30 includes inter-device pipes 33 that connect the second indoor heat exchanger 100B, the compressor 31, the second outdoor heat exchanger 200B, and the expander 32. The second indoor heat exchanger 100B serves as an evaporator in the third closed circuit. The second outdoor heat exchanger 200B serves as a condenser in the third closed circuit.

In the third closed circuit, the compressor 31, the second outdoor heat exchanger 200B, and the expander 32 are example cooperative devices that provide a refrigeration cycle together with the second indoor heat exchanger 100B.

The fourth partial circuit 40 includes a compressor 41 that compresses the refrigerant, an expander 42 that expands the refrigerant, and a four-way valve 44. The fourth partial circuit 40 provides a closed circuit (hereafter referred to as a fourth closed circuit) together with the second indoor heat exchanger 100B and the second outdoor heat exchanger 200B. The fourth closed circuit is independent of the third closed circuit described above.

The fourth partial circuit 40 includes inter-device pipes 43 that connect the second indoor heat exchanger 100B, the compressor 41, the four-way valve 44, the second outdoor heat exchanger 200B, and the expander 42.

In the fourth closed circuit, the four-way valve 44 switches between a mode in which the second indoor heat exchanger 100B serves as an evaporator and the second outdoor heat exchanger 200B serves as a condenser, and a mode in which the second indoor heat exchanger 100B serves as a condenser and the second outdoor heat exchanger 200B serves as an evaporator.

In the fourth closed circuit, the compressor 41, the second outdoor heat exchanger 200B, and the expander 42 are example cooperative devices that provide a refrigeration cycle together with the second indoor heat exchanger 100B.

The structure of the housing 500 is now described.

The housing 500 accommodates the refrigerant circuit RCA including the first and second closed circuits described above, the refrigerant circuit RCB including the third and fourth closed circuits described above, the indoor fan 310, and the outdoor fan 320. The housing 500 includes a bottom plate 520 located below the refrigerant circuits RCA and RCB, the indoor fan 310, and the outdoor fan 320, and a partition plate 510 extending upward from the bottom plate 520.

The housing 500 includes an indoor portion 530 defining a compartment connection space SA and an outdoor portion 540 defining a first external connection space SB1. The compartment connection space SA connects to the compartment 910. The first external connection space SB1 connects to the outside EX.

The indoor portion 530 covers a part of the bottom plate 520 to define the compartment connection space SA together with the bottom plate 520 and the partition plate 510. The outdoor portion 540 covers a part of the bottom plate 520 different from the part covered with the indoor portion 530 to define the first external connection space SB1 together with the bottom plate 520 and the partition plate 510.

The partition plate 510 hermetically partitions the inside of the housing 500 into the compartment connection space SA and the first external connection space SB1.

In the refrigerant circuit RCA, a main portion of the first indoor heat exchanger 100A that performs heat exchange between the refrigerant and the inside air is located in the compartment connection space SA. Similarly, in the refrigerant circuit RCB, a main portion of the second indoor heat exchanger 100B that performs heat exchange between the refrigerant and the inside air is located in the compartment connection space SA. The indoor fan 310 is also located in the compartment connection space SA.

The indoor portion 530 includes return ports 531 and an outlet port 532 connecting to the compartment 910. The indoor fan 310 draws air inside the compartment 910 into the compartment connection space SA through the return ports 531, allows the drawn inside air to pass through the main portions of the first indoor heat exchanger 100A and the second indoor heat exchanger 100B, and returns the air to the compartment 910 through the outlet port 532.

The indoor portion 530 includes dampers 533 that cause fresh outside air to be drawn into the compartment connection space SA. When the dampers 533 are open, the indoor fan 310 draws fresh outside air into the compartment connection space SA through the open dampers 533. The fresh outside air drawn into the compartment connection space SA merges with the inside air drawn into the compartment connection space SA.

Portions of the refrigerant circuit RCA other than the main portion of the first indoor heat exchanger 100A, or more specifically, the cooperative devices in the first and second closed circuits described above and the inter-device pipes 13 and 23 that connect the cooperative devices and the first indoor heat exchanger 100A are located in the first external connection space SB1.

Similarly, the portions of the refrigerant circuit RCB other than the main portion of the second indoor heat exchanger 100B, or more specifically, the cooperative devices in the third and fourth closed circuits described above and the inter-device pipes 33 and 43 that connect the cooperative devices and the second indoor heat exchanger 100B are located in the first external connection space SB1. The outdoor fan 320 is also located in the first external connection space SB1.

As illustrated in FIG. 1, the outdoor portion 540 has an intake port 541 and exhaust ports 542 connecting to the outside EX. The intake port 541 is open in the top surface of the housing 500, and the exhaust ports 542 are open in side surfaces of the housing 500. Referring back to FIG. 3, the outdoor fan 320 draws outside air through the intake port 541 (not illustrated in FIG. 3), allows the drawn outside air to pass through the first outdoor heat exchanger 200A and the second outdoor heat exchanger 200B, and discharges the air to the outside EX through the exhaust ports 542.

As described above, in the refrigerant circuit RCA, the main portion of the first indoor heat exchanger 100A alone is located in the compartment connection space SA. Portions of the refrigerant circuit RCA other than the main portion of the first indoor heat exchanger 100A are located in the first external connection space SB1.

Similarly, in the refrigerant circuit RCB, the main portion of the second indoor heat exchanger 100B alone is located in the compartment connection space SA. Portions of the refrigerant circuit RCB other than the main portion of the second indoor heat exchanger 100B are located in the first external connection space SB1.

This structure can thus reduce the possibility of the refrigerant leaking in the compartment connection space SA to less than the possibility of the refrigerant leaking in the first external connection space SB1.

As described above, the compartment connection space SA is hermetically separated by the partition plate 510 from the first external connection space SB1. Thus, when the refrigerant in the first external connection space SB1 leaks, the partition plate 510 blocks the leaking refrigerant that is to flow into the compartment connection space SA.

When the refrigerant in the first external connection space SB1 leaks, the air conditioner 700 for a vehicle according to the present embodiment can quickly discharge the leaking refrigerant to the outside EX.

More specifically, the bottom plate 520 has a first opening 521 connecting to the outside EX in a portion covered with the outdoor portion 540. In other words, in addition to the intake port 541 and the exhaust ports 542, the first external connection space SB1 also connects to the outside EX through the first opening 521. Thus, when the refrigerant in the first external connection space SB1 leaks, the leaking refrigerant is quickly discharged to the outside EX.

The refrigerant used in the present embodiment has a greater mean molecular weight than air and has a higher density in a gaseous state under atmospheric pressure and normal temperature than air. Thus, although the outdoor fan 320 is stopped, the refrigerant leaking in the first external connection space SB1 is discharged to the outside EX through the first opening 521 due to the weight of the refrigerant.

Examples of the refrigerant with a greater mean molecular weight than air used in the present embodiment include a substance containing at least 95% by mass of hydrocarbon such as propane or carbon dioxide. The refrigerant may be flammable.

In the first external connection space SB1, the components of the refrigerant circuits RCA and RCB are located below the outdoor fan 320. The outdoor fan 320 in the present embodiment generates, in the first external connection space SB1, a downflow flowing from the intake port 541 open in the top surface of the housing 500 toward the exhaust ports 542 or the first opening 521 open in the side surfaces of the housing 500.

More specifically, in the first external connection space SB1, the components of the refrigerant circuits RCA and RCB are located below the outdoor fan 320 and downstream from the outdoor fan 320 in the flow of outside air. Thus, when the refrigerant in the first external connection space SB1 leaks, the outdoor fan 320 is less likely to be exposed to the leaking refrigerant.

Although the refrigerant mainly containing a flammable refrigerant, or more specifically, propane, is used, the leaking refrigerant can avoid being ignited. In other words, when a flammable refrigerant in the first external connection space SB1 leaks and an accidental spark occurs in the outdoor fan 320, the refrigerant can avoid being ignited.

As described above, when the refrigerant in the first external connection space SB1 leaks, the structure according to the present embodiment can quickly discharge the leaking refrigerant to the outside EX to provide sufficient security.

In addition, the compartment connection space SA hermetically separate from the first external connection space SB1 is less likely to allow the refrigerant to flow into the compartment 910 through the compartment connection space SA. In addition, the first indoor heat exchanger 100A and the second indoor heat exchanger 100B in the present embodiment can further reduce the possibility of the refrigerant flowing into the compartment 910. This structure is described below.

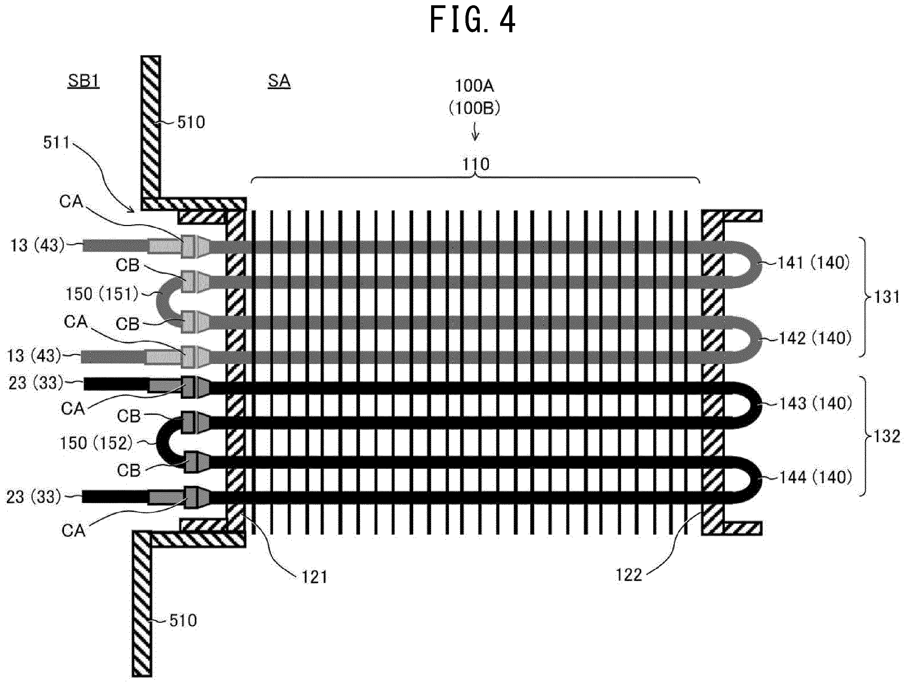

FIG. 4 illustrates the structure of the first indoor heat exchanger 100A. Although the first indoor heat exchanger 100A is described below as an example, the second indoor heat exchanger 100B has the same structure.

The first indoor heat exchanger 100A includes a fin set 110 serving as a heat exchanger and a pair of end plates 121 and 122 located at two ends of the fin set 110 in the width direction.

The fin set 110 includes multiple fins. The main portion described above refers to the fin set 110. The end plates 121 and 122 hold the fin set 110 in between from two sides of the fin set 110 in the width direction. An airflow formed by the indoor fan 310 illustrated in FIG. 3 passes through the fin set 110 in a direction perpendicular to the width direction of the fin set 110.

The first indoor heat exchanger 100A includes heat-transfer pipes 131 and 132 extending through the fin set 110 and the end plates 121 and 122. The refrigerant flows through the heat-transfer pipes 131 and 132.

Each of the heat-transfer pipes 131 and 132 includes multiple partial pipes 140 each having a seamless structure, and a serial connection pipe 150 that connects the partial pipes 140 in series. The serial connection pipe 150 also has a seamless structure.

More specifically, the partial pipes 140 included in the heat-transfer pipe 131 are a first hairpin pipe 141 and a second hairpin pipe 142. Each of the first hairpin pipe 141 and the second hairpin pipe 142 has a hairpin shape, and includes a bend and a pair of open ends. Each of the first hairpin pipe 141 and the second hairpin pipe 142 has the length from the bend to the pair of open ends longer than the width of the fin set 110.

The serial connection pipe 150 included in the heat-transfer pipe 131 is formed from a first U-bent pipe 151 with a U shape. The first U-bent pipe 151 connects one open end of the first hairpin pipe 141 and one open end of the second hairpin pipe 142.

The first U-bent pipe 151 and each of the first hairpin pipe 141 and the second hairpin pipe 142 are connected by welding, or more specifically, by soldering. In other words, the heat-transfer pipe 131 includes joints (hereafter referred to as intra-device joints) CB at which the first U-bent pipe 151 is connected to each of the first hairpin pipe 141 and the second hairpin pipe 142.

In contrast, the other open end of the first hairpin pipe 141 and the other open end of the second hairpin pipe 142 are connected to the inter-device pipes 13 described above. In other words, in the first indoor heat exchanger 100A, the heat-transfer pipes 131 are parts of the first closed circuit described above.

The inter-device pipe 13 and the first hairpin pipe 141 are connected by welding, or more specifically, by soldering. The inter-device pipe 13 and the second hairpin pipe 142 are connected by welding, or more specifically, by soldering. In other words, the heat-transfer pipe 131 includes joints (hereafter referred to as inter-device joints) CA at which the inter-device pipes 13 is connected to the first hairpin pipe 141 and the second hairpin pipe 142.

Similarly, the partial pipes 140 included in the heat-transfer pipe 132 are a third hairpin pipe 143 and a fourth hairpin pipe 144. Each of the third hairpin pipe 143 and the fourth hairpin pipe 144 has a hairpin shape, and includes a bend and a pair of open ends. Each of the third hairpin pipe 143 and the fourth hairpin pipe 144 has the length from the bend to the pair of open ends longer than the width of the fin set 110.

The serial connection pipe 150 included in the heat-transfer pipe 132 is formed from a second U-bent pipe 152 with a U shape. The second U-bent pipe 152 connects one open end of the third hairpin pipe 143 and one open end of the fourth hairpin pipe 144.

The second U-bent pipe 152 and each of the third hairpin pipe 143 and the fourth hairpin pipe 144 are connected by welding, or more specifically, by soldering. In other words, the heat-transfer pipe 132 includes joints (hereafter referred to as intra-device joints) CB at which the second U-bent pipe 152 is connected to each of the third hairpin pipe 143 and the fourth hairpin pipe 144.

In contrast, the other open end of the third hairpin pipe 143 and the other open end of the fourth hairpin pipe 144 are connected to the inter-device pipes 23 described above. In other words, the heat-transfer pipes 132 in the first indoor heat exchanger 100A are parts of the second closed circuit described above.

The inter-device pipe 23 and the third hairpin pipe 143 are connected by welding, or more specifically, by soldering. The inter-device pipe 23 and the fourth hairpin pipe 144 are connected by welding, or more specifically, by soldering. In other words, the heat-transfer pipe 132 includes joints (hereafter referred to as inter-device joints) CA at which the inter-device pipe 23 is connected to the third hairpin pipe 143 and the fourth hairpin pipe 144.

In the above manner, the first indoor heat exchanger 100A is shared by the first and second closed circuits. However, the heat-transfer pipe 131 and the heat-transfer pipe 132 are independent of each other. Thus, the refrigerant enclosed in the first closed circuit and the refrigerant enclosed in the second closed circuit do not mix each other.

Similarly, the second indoor heat exchanger 100B is shared by the third and fourth closed circuits. In other words, in the second indoor heat exchanger 100B, the other open end of the third hairpin pipe 143 and the other open end of the fourth hairpin pipe 144 are connected to the inter-device pipes 33 described above. The other open end of the first hairpin pipe 141 and the other open end of the second hairpin pipe 142 are connected to the inter-device pipes 43 described above.

In the first indoor heat exchanger 100A and the second indoor heat exchanger 100B in the present embodiment, all the joints in the heat-transfer pipes 131 and 132 resulting from welding are located in the first external connection space SB1, and thus simply the portions with a seamless structure are located in the compartment connection space SA.

More specifically, the joints including all the intra-device joints CB in addition to all the inter-device joints CA are located in the first external connection space SB1. Portions of the seamless partial pipes 140 other than the portions forming the intra-device joints CB are located in the compartment connection space SA.

The possibility of accidental leakage of the refrigerant from the seamless structure is lower than the possibility of accidental leakage of the refrigerant from the joints resulting from welding. Thus, the above structure can further reduce the possibility of the refrigerant flowing into the compartment 910.

The structure of all the inter-device joints CA and the intra-device joints CB located in the first external connection space SB1 is now described.

The first to fourth hairpin pipes 141 to 144 extend parallel to the width direction of the fin set 110. The first to fourth hairpin pipes 141 to 144 extend through the end plate 122. More specifically, the first to fourth hairpin pipes 141 to 144 each have the bend protruding from the end plate 122 outward in the width direction of the fin set 110 (hereafter referred to as outward in the width direction).

The first to fourth hairpin pipes 141 to 144 also each extend through the end plate 121. More specifically, the first to fourth hairpin pipes 141 to 144 each have open ends protruding from the end plate 121 outward in the width direction. Thus, the inter-device joints CA and the intra-device joints CB are located more outward in the width direction than the end plate 121, or more specifically, at positions farther from the fin set 110 than the end plate 121 is.

The partition plate 510 described above has through-holes 511. The end plate 121 hermetically closes the corresponding through-hole 511. More specifically, the end plate 121 that holds the heat-transfer pipes 131 and 132 also serves as a closing plate that hermetically closes the through-hole 511.

The first indoor heat exchanger 100A is thus installed with the end plate 121 closing the through-hole 511. Thus, a large part of the portion of each of the first to fourth hairpin pipes 141 to 144 including the bend is located in the compartment connection space SA, whereas the open ends of each of the first to fourth hairpin pipes 141 to 144, the first U-bent pipe 151, and the second U-bent pipe 152 are located in the first external connection space SB1.

Thus, all the inter-device joints CA and the intra-device joints CB are located in the first external connection space SB1. As described above, each of the first to fourth hairpin pipes 141 to 144 has a seamless structure. Thus, no joint resulting from welding is located in the compartment connection space SA.

As described above, in the structure according to the present embodiment, in addition to the inter-device joints CA, the intra-device joints CB are also located in the first external connection space SB1. Thus, the structure can further reduce the possibility of the refrigerant flowing into the compartment 910.

As described above, in the present embodiment, the refrigerant has a greater mean molecular weight than air. Examples of such a refrigerant include propane and another flammable substance (hereafter referred to as a flammable refrigerant). For safety, when a flammable refrigerant is used, the refrigerant enclosed in a closed circuit providing a single refrigeration cycle is restricted to a certain amount.

The structure according to the present embodiment includes the two separate refrigerant circuits RCA and RCB, and each of the refrigerant circuits RCA and RCB includes two closed circuits each separately providing the refrigeration cycle. More specifically, the refrigerant circuit RCA includes the first and second closed circuits, and the refrigerant circuit RCB includes the third and fourth closed circuits.

More specifically, the air conditioner 700 for a vehicle according to the present embodiment includes four closed circuits. Thus, the entire air conditioner 700 for a vehicle can have sufficiently high air-conditioning performance with the flammable refrigerant enclosed in each closed circuit restricted to a fully safe amount, or more specifically, 0.98 kg or less.

### Embodiment 2

As illustrated in FIGS. 3 and 4, in Embodiment 1, the end plate 121 in each of the first indoor heat exchanger 100A and the second indoor heat exchanger 100B closes the corresponding through-hole 511 in the partition plate 510, or more specifically, hermetically separates the compartment connection space SA from the first external connection space SB1. However, the partition plate 510 may eliminate the through-holes 511.

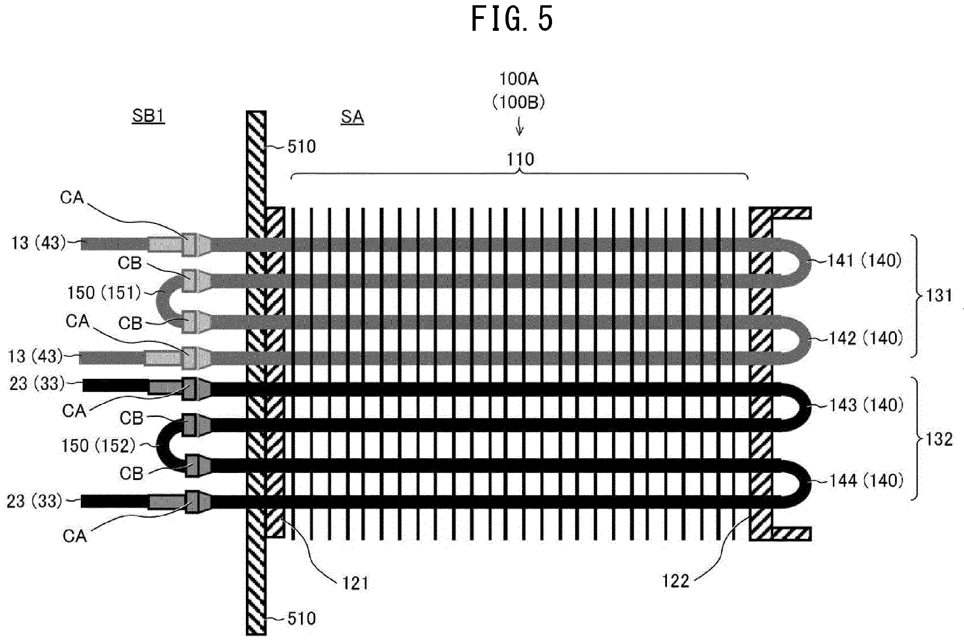

As illustrated in FIG. 5, the end plate 121 in each of the first indoor heat exchanger 100A and the second indoor heat exchanger 100B may be in contact with the partition plate 510. More specifically, the end plate 121 is joined to the partition plate 510 in surface contact with the partition plate 510.

The first to fourth hairpin pipes 141 to 144 each extend through the partition plate 510 in addition to the end plate 121. In other words, the open end of each of the first to fourth hairpin pipes 141 to 144 protrudes from the partition plate 510 outward in the width direction. Thus, the inter-device joints CA and the intra-device joints CB are located more outward in the width direction than the partition plate 510.

In the present embodiment as well, the inter-device joints CA and the intra-device joints CB can be located in the first external connection space SB1. A gap may be left between the end plate 121 and the partition plate 510.

In the structure according to the present embodiment, each of the first to fourth hairpin pipes 141 to 144 is to extend through the partition plate 510 in addition to the end plate 121. Thus, each of the heat-transfer pipes 131 and 132 has a longer path length than the pipes in Embodiment 1. The structure according to Embodiment 1 illustrated in FIGS. 3 and 4 including the end plate 121 closing the through-hole 511 can reduce the length of the heat-transfer pipes 131 and 132.

### Embodiment 3

FIG. 4 illustrates the serial connection pipes 150 that connect the partial pipes 140 in series, as a connection pipe connecting the partial pipes. The connection pipe may not be the serial connection pipe 150.

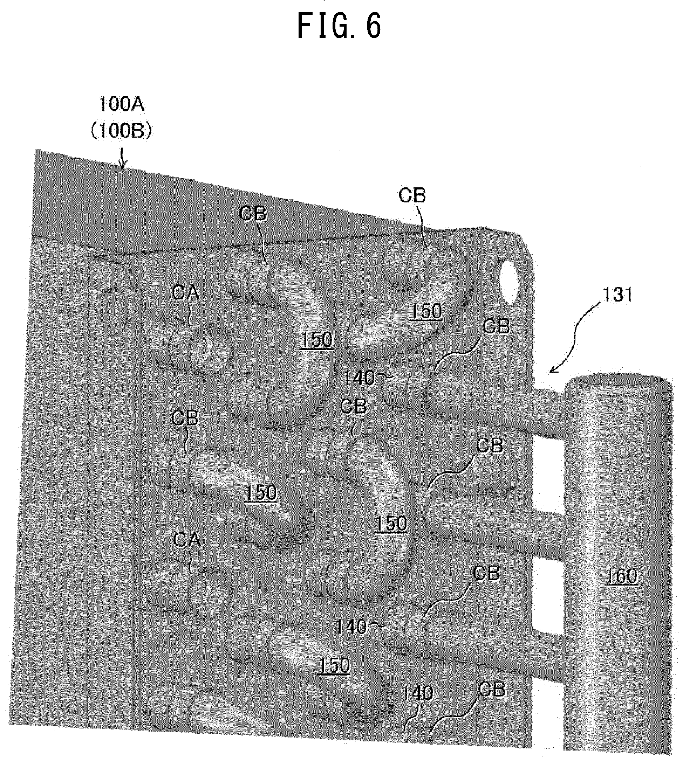

As illustrated in FIG. 6, in addition to the serial connection pipe 150, the heat-transfer pipe 131 may include a parallel connection pipe 160 that connects the partial pipes 140 in parallel. The parallel connection pipe 160 includes, for example, header pipes and a distributer.

### Embodiment 4

FIG. 3 illustrates the inter-device joints CA and the intra-device joints CB located in the first external connection space SB1 defined by the outdoor portion 540.

However, the inter-device joints CA and the intra-device joints CB may be located in a space defined by the indoor portion 530. The structure is described more specifically below.

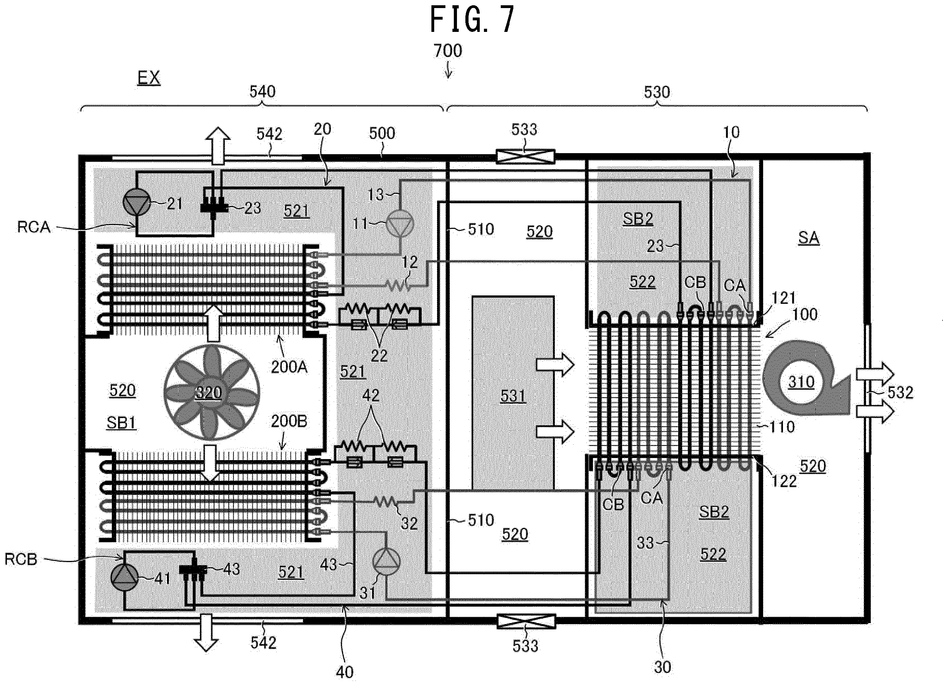

As illustrated in FIG. 7, in the present embodiment, the bottom plate 520 has two second openings 522 connecting to the outside EX in portions covered with the indoor portion 530. Separately from the compartment connection space SA, the indoor portion 530 defines second external connection spaces SB2 in portions corresponding to the second openings 522. Each second external connection space SB2 connects to the outside EX through the corresponding second opening 522. Each second external connection space SB2 is hermetically separate from the compartment connection space SA.

Similarly to the first indoor heat exchanger 100A and the second indoor heat exchanger 100B described above, an indoor heat exchanger 100 in the present embodiment includes the fin set 110 held between the pair of end plates 121 and 122.

However, the indoor heat exchanger 100 in the present embodiment is shared by the refrigerant circuits RCA and RCB, or more specifically, the first to fourth closed circuits described above. The first to fourth closed circuits described above extend through the fin set 110 in the indoor heat exchanger 100 in the present embodiment.

In the present embodiment, the end plate 121 in the indoor heat exchanger 100 serves as a closing plate that defines one of the second external connection spaces SB2 together with the indoor portion 530. The end plate 122 in the indoor heat exchanger 100 also serves as a closing plate that defines the other one of the second external connection spaces SB2 together with the indoor portion 530.

All the inter-device joints CA and the intra-device joints CB are located in each of the second external connection spaces SB2. The inter-device joints CA and the intra-device joints CB in the first and second closed circuits are located in one of the second external connection spaces SB2. The inter-device joints CA and the intra-device joints CB in the third and fourth closed circuits are located in the other one of the second external connection spaces SB2.

One of the second external connection spaces SB2, the fin set 110, and the other one of the second external connection spaces SB2 are arranged in this order in the width direction of the vehicle 700. More specifically, a portion of the indoor portion 530 defining one of the second external connection spaces SB2 and the end plate 121 (hereafter referred to as a first definer) are located at a first end of the vehicle 700 in the width direction. A portion of the indoor portion 530 defining the other one of the second external connection spaces SB2 and the end plate 122 (hereafter referred to as a second definer) are located at a second end of the vehicle 700 in the width direction.

The first and second definers hold the fin set 110 in between. The first and second definers serve as an airflow guide that reduces the airflow of inside air drawn through a return port 531 to allow the air to pass through the fin set 110.

In the present embodiment, the return port 531 is open in the bottom plate 520. In the present embodiment, the partition plate 510 has no through-hole 511. The inter-device pipes 13, 23, 33, and 43 hermetically extend through the partition plate 510. The other components are the same as the components in Embodiment 1.

### Embodiment 5

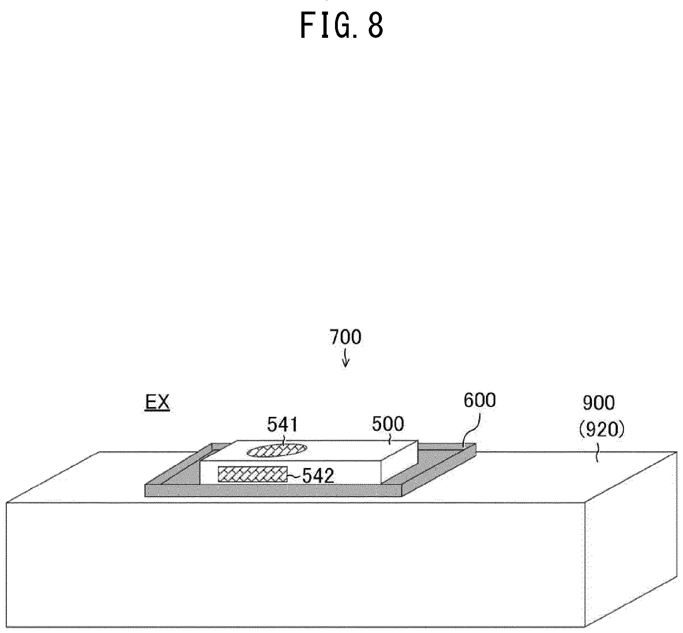

FIG. 8 illustrates an air conditioner 700 for a vehicle according to Embodiment 5. The air conditioner 700 for a vehicle according to the present embodiment further includes a receiver 600 between the housing 500 and the vehicle 900. The components other than the receiver 600 are the same as the components in Embodiment 1.

The receiver 600 is installed on a roof 920 of the vehicle 900. The housing 500 is located on the receiver 600. The receiver 600 extends over a larger area than a projection area acquired by vertically projecting the housing 500 on the receiver 600.

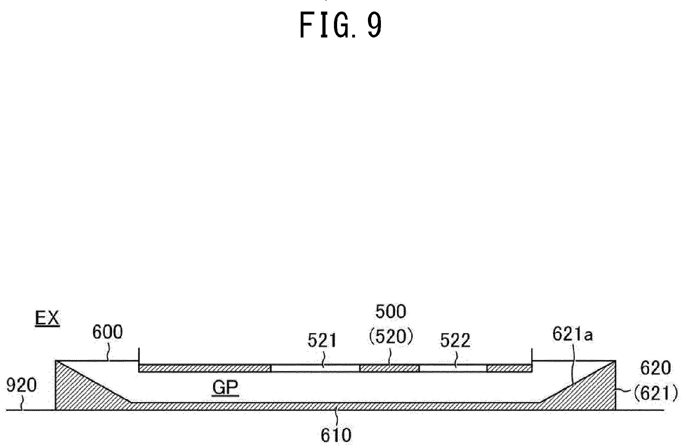

As illustrated in FIG. 9, the receiver 600 is located below the bottom plate 520 of the housing 500. The receiver 600 faces the bottom plate 520. A gap GP connecting to the outside EX is left between the receiver 600 and the bottom plate 520.

The first opening 521 and the second opening 522 in the bottom plate 520 described above face the gap GP. The first external connection space SB1 and the second external connection spaces SB2 described above connect to the outside EX through the gap GP.

The receiver 600 includes a planar bottom 610 and side walls 620 extending upward from the periphery of the bottom 610. In a plan view, the bottom 610 is a rectangle with long sides parallel to the length direction of the vehicle 900 and short sides parallel to the width direction of the vehicle 900.

The length direction of the vehicle 900 refers to a direction parallel to the direction in which the vehicle 900 travels, and the width direction of the vehicle 900 refers to a direction perpendicular to the vertical direction and to the length direction of the vehicle 900.

The side walls 620 include a pair of first side walls 621 facing in the length direction of the vehicle 900. Each first side wall 621 has a slope 621a gradually rising outward in the length direction of the vehicle 900.

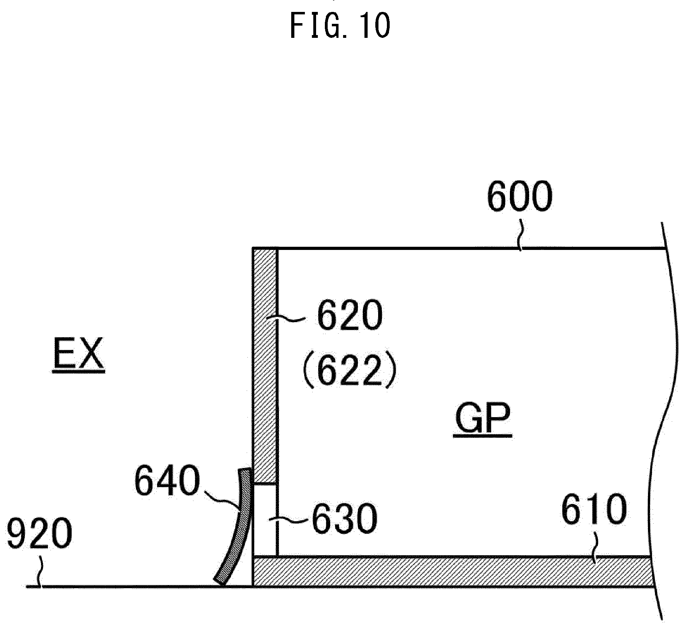

FIG. 10 is a partial cross-sectional view of the receiver 600 taken parallel to the width direction of the vehicle 900. The side walls 620 also include a pair of second side walls 622 facing in the width direction of the vehicle 900. Each second side wall 622 has a drain 630 connecting to the outside EX.

The receiver 600 includes drain valves 640 attached to the drains 630. Each drain valve 640 is attached to the outer surface of the corresponding second side wall 622 facing the outside EX to cover the corresponding drain 630 in the outside EX. The drain valves 640 are formed from rubber or another elastic material.

The drain valves 640 are elastic, and close the drains 630 when the refrigerant is stored in the gap GP. When rainwater is stored in the gap GP, the elastic drain valves 640 bend outward with the pressure of the rainwater and open the drains 630.

In the present embodiment, while the vehicle 900 and the outdoor fan 320 are stopping, the refrigerant leaking in the first external connection space SB1 or the second external connection spaces SB2 can be stored in the receiver 600. Thus, the receiver 600 can prevent the leaking refrigerant from flowing toward passengers at a platform near the vehicle 900.

When activated, the outdoor fan 320 forms airflow to discharge the refrigerant stored in the receiver 600 from the receiver 600 to the outside EX. When the vehicle 900 starts traveling, travel-created air discharges the refrigerant stored in the receiver 600 to the outside EX.

The rainwater stored in the receiver 600 is discharged to the outside EX along the slopes 621a under an inertial force caused by acceleration or deceleration of the vehicle 900 or by travel-created air. The rainwater stored in the receiver 600 is discharged to the outside EX through the drains 630 opened by the drain valves 640.

### Embodiment 6

Various operations performed by the refrigerant circuits RCA and RCB illustrated in FIG. 3 are described. As described above, the refrigerant circuit RCA includes the first and second closed circuits each providing the refrigeration cycle. The refrigerant circuit RCB includes the third and fourth closed circuits each providing the refrigeration cycle.

In the present embodiment and Embodiments 7 to 9 described later, the compressor (hereafter referred to as a second compressor) 21 included in the second closed circuit has a larger capacity than the compressor (hereafter referred to as a first compressor) 11 included in the first closed circuit.

The compressor (hereafter referred to as a fourth compressor) 41 included in the fourth closed circuit has a larger capacity than the compressor (hereafter referred to as a third compressor) 31 included in the third closed circuit.

The capacity of the compressor herein refers to the physical quantity indicating the amount of the refrigerant ejected by the compressor per unit time. More specifically, the ratio of the capacity of the second compressor 21 to the capacity of the first compressor 11 is 7 to 3. The ratio of the capacity of the fourth compressor 41 to the capacity of the third compressor 31 is 7 to 3.

In the present embodiment, in a cooling operation with the first indoor heat exchanger 100A and the second indoor heat exchanger 100B serving as evaporators, and the first outdoor heat exchanger 200A and the second outdoor heat exchanger 200B serving as condensers, the controller 400 illustrated in FIG. 2 operates all of the first compressor 11, the second compressor 21, the third compressor 31, and the fourth compressor 41.

In contrast, in a heating operation with the first indoor heat exchanger 100A and the second indoor heat exchanger 100B serving as condensers, and the first outdoor heat exchanger 200A and the second outdoor heat exchanger 200B serving as evaporators, the controller 400 stops the first compressor 11, operates the second compressor 21, stops the third compressor 31, and operates the fourth compressor 41.

### Embodiment 7

In the present embodiment, the controller 400 switches, in the cooling operation, the refrigerant circuit RCA between a mode in which the first compressor 11 and the second compressor 21 are operated, a mode in which the first compressor 11 is operated and the second compressor 21 is stopped, and a mode in which the first compressor 11 is stopped and the second compressor 21 is operated.

In addition, in the cooling operation, the controller 400 switches the refrigerant circuit RCB between a mode in which the third compressor 31 and the fourth compressor 41 are operated, a mode in which the third compressor 31 is operated and the fourth compressor 41 is stopped, and a mode in which the third compressor 31 is stopped and the fourth compressor 41 is operated.

In the above manner, the cooling capacity of the refrigerant circuit RCA can be switched between three levels, and the cooling capacity of the refrigerant circuit RCB can be switched between three levels. Thus, the refrigerant circuits RCA and RCB can switch the cooling capacity between nine levels in total.

### Embodiment 8

As described with reference to FIG. 4, the first indoor heat exchanger 100A is shared by the first and second closed circuits. Hereafter, in the first indoor heat exchanger 100A, the first closed circuit is referred to as a first indoor portion, and the second closed circuit is referred to as a second indoor portion.

The first indoor portion specifically includes the heat-transfer pipe 131 and a portion of the fin set 110 surrounding the heat-transfer pipe 131. The second indoor portion specifically includes the heat-transfer pipe 132 and a portion of the fin set 110 surrounding the heat-transfer pipe 132.

Similarly, the second indoor heat exchanger 100B is shared by the third and fourth closed circuits. Hereafter, in the second indoor heat exchanger 100B, the third closed circuit is referred to as a third indoor portion, and the fourth closed circuit is referred to as a fourth indoor portion.

The first outdoor heat exchanger 200A illustrated in FIG. 3 is also shared by the first and second closed circuits. Hereafter, in the first outdoor heat exchanger 200A, the first closed circuit is referred to as a first outdoor portion, and the second closed circuit is referred to as a second outdoor portion.

The second outdoor heat exchanger 200B illustrated in FIG. 3 is also shared by the third and fourth closed circuits. Hereafter, in the second outdoor heat exchanger 200B, the third closed circuit is referred to as a third outdoor portion, and the fourth closed circuit is referred to as a fourth outdoor portion.

In the present embodiment, the controller 400 performs first defrosting control to operate, while operating the second compressor 21 using the second indoor portion as a condenser, the first compressor 11 using the first indoor portion as an evaporator.

In the first defrosting control, the second outdoor portion serves as an evaporator, and the first outdoor portion serves as a condenser. Although the second outdoor portion generates the cold, the first outdoor portion generates heat. This control thus reduces frost adhering to the first outdoor heat exchanger 200A.

The controller 400 also performs second defrosting control to operate, while operating the fourth compressor 41 using the fourth indoor portion as a condenser, the third compressor 31 using the third indoor portion as an evaporator.

In the second defrosting control, the fourth outdoor portion serves as an evaporator, and the third outdoor portion serves as a condenser. Although the fourth outdoor portion generates the cold, the third outdoor portion generates heat. This control thus reduces frost adhering to the second outdoor heat exchanger 200B.

### Embodiment 9

In the present embodiment, the controller 400 performs first dehumidification control to operate, while operating the second compressor 21 using the second indoor portion as an evaporator, the first compressor 11 using the first indoor portion as a condenser.

In the first dehumidification control, although the second indoor portion generates the cold, the first indoor portion generates heat. Thus, the first indoor heat exchanger 100A can dehumidify the compartment 910 without excessively lowering the temperature in the compartment 910.

The controller 400 also performs second dehumidification control to operate, while operating the fourth compressor 41 using the fourth indoor portion as an evaporator, the third compressor 31 using the third indoor portion as a condenser.

In the second dehumidification control, although the fourth indoor portion generates the cold, the third indoor portion generates heat. Thus, the second indoor heat exchanger 100B can dehumidify the compartment 910 without excessively lowering the temperature in the compartment 910.

### Embodiment 10

As described above, the first indoor heat exchanger 100A and the second indoor heat exchanger 100B are fin tube heat exchangers. The first indoor heat exchanger 100A includes the first indoor portion including the first closed circuit and the second indoor portion including the second closed circuit. The second indoor heat exchanger 100B includes the third indoor portion including the third closed circuit and the fourth indoor portion including the fourth closed circuit.

In the present embodiment, in the first indoor heat exchanger 100A and the second indoor heat exchanger 100B illustrated in FIG. 4, the heat-transfer pipes 131 and 132 have an outside diameter less than or equal to 5 mm to reduce the capacity, and have a pipe arrangement pitch greater than or equal to 17 mm to increase the area of the fin set 110. Thus, the first indoor heat exchanger 100A and the second indoor heat exchanger 100B can enhance the heat exchange efficiency.

As illustrated in FIG. 4, the partial pipes 140 each include a pair of straight portions extending straight in the width direction of the fin set 110, and a bend connecting these straight portions. The pipe arrangement pitch refers to a distance between the straight portions in each partial pipe 140, and a distance between a straight portion of one partial pipe 140 and the straight portion of another partial pipe 140 adjacent to the partial pipe 140.

The first outdoor heat exchanger 200A and the second outdoor heat exchanger 200B are also fin tube heat exchangers. The first outdoor heat exchanger 200A and the second outdoor heat exchanger 200B also have the same structure as the first indoor heat exchanger 100A and the second indoor heat exchanger 100B.

Although not illustrated, in the first outdoor heat exchanger 200A and the second outdoor heat exchanger 200B, the heat-transfer pipes have an outside diameter less than or equal to 5 mm to reduce the capacity, and a pipe arrangement pitch greater than or equal to 17 mm to increase the area of the fin set. Thus, the first outdoor heat exchanger 200A and the second outdoor heat exchanger 200B can enhance the heat exchange efficiency.

Embodiments 1 to 10 are described as above. Embodiments 1 to 10 may be modified in the manner described below.

FIGS. 3 and 7 each illustrate the air conditioner 700 for a vehicle including four closed circuits separately providing refrigeration cycles. However, the air conditioner 700 for a vehicle may include one closed circuit, or two, three, or five or more closed circuits.

FIG. 1 illustrates the air conditioner 700 for a vehicle installed on the roof of the vehicle 900. However, the air conditioner 700 for a vehicle may be at any position on the vehicle 900. The air conditioner 700 for a vehicle may be installed under the floor of the vehicle 900.

The receiver 600 illustrated in FIG. 8 may be eliminated. The bottom plate 520 of the housing 500 may be located above the top surface of the vehicle 900 with a gap left between the bottom plate 520 and the top surface. When the air conditioner 700 for a vehicle is located under the floor of the vehicle 900, the bottom plate 520 of the housing 500 may face the ground.

Embodiments 1 to 10 and modifications of Embodiments 1 to 10 may be combined with one another. The concept of the vehicle herein includes buses on regular routes and other automobiles, in addition to a railway vehicle. The railway vehicle includes a vehicle travelling along tracks, such as a bullet train and a monorail train, in addition to an electric train.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

- 10: First partial circuit
- 11: Compressor (first compressor)
- 12: Expander
- 13: Inter-device pipe
- 20: Second partial circuit
- 21: Compressor (second compressor)
- 22: Expander
- 23: Inter-device pipe
- 24: Four-way valve
- 30: Third partial circuit
- 31: Compressor (third compressor)
- 32: Expander
- 33: Inter-device pipe
- 40: Fourth partial circuit
- 41: Compressor (fourth compressor)
- 42: Expander
- 43: Inter-device pipe
- 44: Four-way valve
- 100: Indoor heat exchanger
- 100A: First indoor heat exchanger (indoor heat exchanger)
- 100B: Second indoor heat exchanger (indoor heat exchanger)
- 110: Fin set (heat exchanger)
- 121: End plate
- 122: End plate
- 131: Heat-transfer pipe
- 132: Heat-transfer pipe
- 140: Partial pipe
- 141: First hairpin pipe
- 142: Second hairpin pipe
- 143: Third hairpin pipe
- 144: Fourth hairpin pipe
- 150: Serial connection pipe (connection pipe)
- 151: First U-bent pipe
- 152: Second U-bent pipe
- 160: Parallel connection pipe (connection pipe)
- 200A: First outdoor heat exchanger
- 200B: Second outdoor heat exchanger
- 310: Indoor fan
- 320: Outdoor fan
- 400: Controller
- 500: Housing
- 510: Partition plate
- 511: Through-hole
- 520: Bottom plate
- 521: First opening (opening)
- 522: Second opening (opening)
- 530: Indoor portion
- 531: Return port
- 532: Outlet port
- 533: Damper
- 540: Outdoor portion
- 541: Intake port
- 542: Exhaust port
- 600: Receiver
- 610: Bottom
- 620: Side wall
- 621: First side wall
- 621a: Slope
- 622: Second side wall
- 630: Drain
- 640: Drain valve
- 700: Air conditioner for vehicle
- 900: Vehicle
- 910: Compartment
- 920: Roof
- CA: Inter-device joint
- CB: Intra-device joint
- EX: Outside
- GP: Gap
- RCA: Refrigerant circuit
- RCB: Refrigerant circuit
- SA: Compartment connection space
- SB1: First external connection space (external connection space)
- SB2: Second external connection space (external connection space)

## Claims

1. An air conditioner for a vehicle, the air conditioner comprising:
a housing installable on a vehicle; and
a refrigerant circuit accommodated in the housing, wherein
the housing defines, in an internal space of the housing,
an external connection space connecting to an outside, and
a compartment connection space hermetically separate from the external connection space and connecting to a compartment of the vehicle,
the refrigerant circuit includes
an indoor heat exchanger including a heat exchanger located in the compartment connection space and a heat-transfer pipe extending through the heat exchanger to allow a refrigerant to flow through the heat-transfer pipe,
a cooperative device located in the external connection space to provide, together with the indoor heat exchanger, a refrigeration cycle using the refrigerant, and
an inter-device pipe connecting the heat-transfer pipe and the cooperative device to allow the refrigerant to flow through the inter-device pipe,
the heat-transfer pipe includes
a plurality of partial pipes having a seamless structure, and
a connection pipe connecting the plurality of partial pipes to one another, and
the external connection space includes an inter-device joint between the heat-transfer pipe and the inter-device pipe, and includes an intra-device joint between each partial pipe of the plurality of partial pipes and the connection pipe.

2. The air conditioner according to claim 1, wherein
the housing includes a partition plate separating the external connection space and the compartment connection space from each other,
the partition plate has a through-hole,
the indoor heat exchanger includes an end plate located at an end of the heat exchanger,
each partial pipe of the plurality of partial pipes extends through the end plate, and the inter-device joint and the intra-device joint are located farther from the heat exchanger than the end plate is, and
the end plate hermetically closes the through-hole.

3. The air conditioner according to claim 1, wherein
the housing includes a bottom plate located below the refrigerant circuit,
the bottom plate has an opening, and
the external connection space connects to the outside through the opening.

4. The air conditioner according to claim 3, wherein
the housing includes
a partition plate extending upward from the bottom plate, and
an outdoor portion covering a part of the bottom plate and defining, together with the bottom plate and the partition plate, a first external connection space being the external connection space accommodating the cooperative device, and
the bottom plate has a first opening being the opening in the part covered with the outdoor portion, and the first external connection space connects to the outside through the first opening.

5. The air conditioner according to claim 3, wherein
the housing includes
a partition plate extending upward from the bottom plate,
an outdoor portion covering a part of the bottom plate and defining, together with the bottom plate and the partition plate, a first external connection space being the external connection space accommodating the cooperative device, and
an indoor portion covering another part of the bottom plate different from the part covered with the outdoor portion and defining, together with the bottom plate and the partition plate, the compartment connection space accommodating the heat exchanger,
the bottom plate has, in the another part covered with the indoor portion, a second opening being the opening, and
the indoor portion defines, separately from the compartment connection space, a second external connection space being the external connection space connecting to the outside through the second opening, and the inter-device joint and the intra-device joint are located in the second external connection space.

6. The air conditioner according to claim 3, further comprising:
a receiver located below the bottom plate and facing the bottom plate across a gap connecting to the outside.

7. The air conditioner according to any one of claims 1 to 6, wherein
the refrigerant circuit includes a first closed circuit and a second closed circuit each providing a refrigeration cycle,
the first closed circuit includes, as the cooperative device, a first compressor to compress the refrigerant, and the second closed circuit includes, as the cooperative device, a second compressor to compress the refrigerant,
the second compressor included in the second closed circuit has a capacity larger than the first compressor included in the first closed circuit, and
the air conditioner further comprises a controller to operate the first compressor and the second compressor during a cooling operation, and to stop the first compressor and operate the second compressor during a heating operation.

8. The air conditioner according to any one of claims 1 to 6, wherein the refrigerant circuit includes a first closed circuit and a second closed circuit each providing a refrigeration cycle,
the first closed circuit includes, as the cooperative device, a first compressor to compress the refrigerant, and the second closed circuit includes, as the cooperative device, a second compressor to compress the refrigerant,
the second compressor included in the second closed circuit has a capacity larger than the first compressor included in the first closed circuit, and
the air conditioner further comprises a controller to switch the refrigerant circuit between a mode in which the first compressor and the second compressor are operated, a mode in which the first compressor is operated and the second compressor is stopped, and a mode in which the first compressor is stopped and the second compressor is operated.

9. The air conditioner according to any one of claims 1 to 6, wherein the refrigerant circuit includes a first closed circuit and a second closed circuit each providing a refrigeration cycle,
the first closed circuit includes, as the cooperative device, a first compressor to compress the refrigerant, and the second closed circuit includes, as the cooperative device, a second compressor to compress the refrigerant,
the second compressor included in the second closed circuit has a capacity larger than the first compressor included in the first closed circuit,
the indoor heat exchanger includes a first indoor portion including the first closed circuit and a second indoor portion including the second closed circuit, and
the air conditioner further comprises a controller to operate the first compressor using the first indoor portion as one of a condenser to condense the refrigerant or an evaporator to evaporate the refrigerant while operating the second compressor using the second indoor portion as another one of the condenser or the evaporator.

10. The air conditioner according to any one of claims 1 to 6, wherein
the refrigerant circuit includes a first closed circuit and a second closed circuit each providing a refrigeration cycle, and
the indoor heat exchanger is a fin tube heat exchanger including a first indoor portion including the first closed circuit and a second indoor portion including the second closed circuit.
